# EUROPÄISCHE PATENTSCHRIFT

(11) **EP 1 614 277 B1**
(45) Veröffentlichungstag und Bekanntmachung des Hinweises auf die Patenterteilung: **02.07.2008**
(21) Anmeldenummer: 03788895.5
(22) Anmeldetag: 09.09.2003
(51) Int. Cl.: H04M 3/42, H04Q 3/00

(54) **VERFAHREN ZUM VORSEHEN EINES TEILNEHMERINTERAKTIONS-DIENSTES ("USER INTERACTIVE DIALOGUE (UID) VOR VERBINDUNGSANNAHME") VOR VERBINDUNGSANNAHME DURCH DEN GERUFENEN TEILNEHMER**
METHOD OF PROVIDING OF A SUBSCRIBER INTERACTION SERVICE ("USER INTERACTIVE DIALOGUE (UID) PRIOR TO CALL COMPLETION") PRIOR TO COMPLETING THE CALL TO THE CALLED SUBSCRIBER
PROCEDE POUR FOURNIR UN SERVICE DE DIALOGUE INTERACTIF AVEC L'ABONNE ("USER INTERACTIVE DIALOGUE (UID) AVANT L'ETABLISSEMENT D'APPEL") AVANT L'ETABLISSEMENT D'APPEL AVEC L'ABONNE APPELE

(30) Priorität: 16.04.2003 EP 03008955
(43) Veröffentlichungstag der Anmeldung: 11.01.2006
(73) Patentinhaber: Nokia Siemens Networks GmbH & Co. KG, 81541 München (DE)
(72) Erfinder: HOFFMANN, Klaus, 81735 München (DE)
(86) Internationale Anmeldenummer: PCT/EP2003/010018
(87) Internationale Veröffentlichungsnummer: WO 2004/093421

(56) Entgegenhaltungen:
- WO-A-01/49011
- US-A1- 2003 021 264
- KNIGHT R R ET AL: "BEARER-INDEPENDENT CALL CONTROL" BT TECHNOLOGY JOURNAL, BT LABORATORIES, GB, Bd. 19, Nr. 2, 1. April 2001 (2001-04-01), Seiten 77-88, XP001034590 ISSN: 1358-3948
- ANONYMOUS: "Bearer Indepedent Call Control Protocol (CS2) Functional Description, Draft Recommendation Q.1902.1" 1. Juli 2001 (2001-07-01), , XP002197241 Gefunden im Internet: URL:www.itu.int/itudoc/itu-t/circ/01-04_1/ 035_ww9.doc> [gefunden am 2002-04-23] Seite 1

## Beschreibung

"User Interactive Dialogue (UID)" Dienste sind aus US 2003/0021264 A1 bekannt. Diese Schrift offenbart darüber hinaus Wegelenkung und Rufweitergabe in einer Call Center Umgebung.

Paketorientierte Sprachnetze, auch Voice over Packet VoP Netze genannt, ersetzen oder ergänzen in zunehmendem Maße herkömmliche leitungsvermittelnde Sprachnetze (PSTN = Public Switched Telephone Networks). Gleichzeitig verschmelzen bislang getrennte, dedizierte Netze zur Datenübertragung und Sprachübertragung zu einem einzigen Netz, welches häufig konvergentes Netz oder Netzwerk der nächsten Generation (NGN = Next Generation Network) genannt wird.

Als Netzzugangseinheiten für Nutzer der paketorientierten Netze dienen dabei sogenannte Media Gateways (MG), die in Verbindung mit den Teilnehmerendgeräten einerseits und dem restlichen Netzwerk andererseits stehen. Media Gateways dienen darüber hinaus auch der Anbindung von PSTN-Netzabschnitten an die paketorientierten Netze.

In Kommunikationsnetzen der betrachteten Art wird häufig zwischen Signalisierungsinformation und Nutzinformation unterschieden. Signalisierungsinformationen betreffen beispielsweise Aufbau, Abbau und weitere Steuerungsvorgänge einer Verbindung, wobei über die Verbindung die Nutzinformationen beispielsweise zwischen zwei Teilnehmern übertragen werden.

Entsprechend existieren zwei zumindest logisch verschiedene Subnetze im Kommunikationsnetz: das Subnetz für Signalisierung und das Subnetz für Nutzinformationen. Besteht eine Verbindung im Subnetz für Nutzinformationen, wird diese häufig Nutzkanal oder Bearer Channel genannt.

Die Nutzinformationen werden im paketorientierten Netz über die genannten Media Gateways geleitet, während die Signalisierungsinformationen durch Media Gateway Controller ausgewertet und transportiert werden. Ansprechend auf die Signalisierungsinformationen steuern die Media Gateway Controller (MGC) die Media Gateways (MG), welche wiederum die empfangene Steuerung in eine Beeinflussung der Nutzkanäle umsetzen.

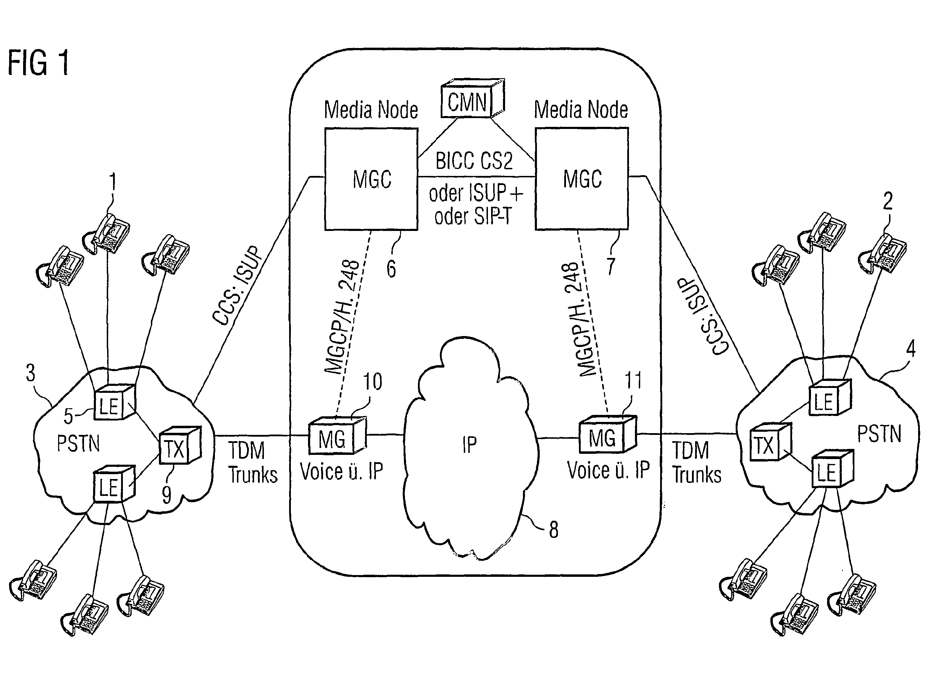

Zur Kommunikation zwischen MGC sind verschiedene Signalisierungsprotokolle vorgesehen. Zu diesen gehört beispielsweise BICC CS2 (Bearer Independent Call Control - Capability Set 2) gemäß ITU-T Q.1902.X, im Zusammenhang mit einem eigenen Service Indicator (SI) für den Message Transfer Part (MTP) und Q.765.5 Bearer Application Transport (BAT). Dieser Standard beschreibt für den Fall, daß im paketorientierten Netz das Real-Time Protocol (RTP) vorgesehen ist, Möglichkeiten für das Vorsehen von bekannten Diensten des PSTN in einer Netzwerkanordnung, bei der zwei PSTN-Netzwerkabschnitte mittels paketorientiertem Netz verbunden sind. Eine solche Netzwerkanordnung ist beispielhaft in Fig. 1 dargestellt.

Fig. 1 zeigt in schematischer Weise, wie bei einer Trennung von Signalisierung und Nutzkanal die für den Aufbau einer Kommunikationsverbindung zwischen zwei Telekommunikations-Endgeräten 1, 2 notwendigen Informationen zwischen den einzelnen Netzkomponenten ausgetauscht werden. Dabei fordert ein A-Teilnehmer über ein Telekommunikationsendgerät 1, welches an ein erstes PSTN 3 angeschlossen ist, bei einer zugehörigen Ortsvermittlüngsstelle (LE = Local Exchange) 5 einen Rufaufbau zu einem Telekommunikationsendgerät 2 eines B-Teilnehmers an.

Diese Rufanforderung bewirkt einen Verbindungsaufbau, der über einen ersten und zweiten MGC 6, 7 erfolgt. Dabei werden Informationen mittels eines entsprechenden Signalisierungsprotokolls an den ersten Media Gateway Controller 6 übertragen. In der Praxis wird als Signalisierungsprotokoll häufig das Zeichengabesystem Nr. 7, auch bekannt als Common Channel Signaling System 7 (CCS7 oder SS7) eingesetzt, wobei speziell für den Verbindungsaufbau Nachrichten des ISDN User Part (ISUP) verwendet werden.

Der MGC 6 kommuniziert seinerseits mit dem zweiten Media Gateway Controller 7 mittels eines weiteren Signalisierungsprotokolls, etwa BICC CS2. Der zweite MGC 7 erhält somit alle Dienst- oder Leistungsmerkmale betreffenden Signalisierungsinformationen und überträgt diese Informationen an ein PSTN 4, in welchem das Endgerät 2 des B-Teilnehmers angeordnet ist. Die Übertragung erfolgt wiederum über ein entsprechendes Signalisierungsprotokoll, in einem PSTN in der Regel wiederum CCS7.

Neben dem bereits erwähnten weiteren Signalisierungsprotokoll BICC CS2 für die MGC-zu-MGC-Kommunikation wurden durch die IETF die Standards RFC 3261 (SIP = Session Initiation Protocol) und RFC 3204 (ISUP MIME Type) entwickelt, die den Tunneltransport von ISUP Nachrichten in SIP Nachrichten erlauben. Solche SIP Nachrichten zur MGC-zu-MGC-Kommunikation werden auch als SIP-T Nachrichten bezeichnet.

Ferner existiert RFC 2976 (INFO method), worin der Transport von ISUP-Nachrichten vorgesehen wird, die sich nicht auf SIP abbilden lassen.

Als nachteilig hat es sich herausgestellt, daß mit aktuellen Implementierungen der Dienst "User Interactive Dialogue" (UID) vor dem Annehmen der Verbindung durch den B-Teilnehmer (auch als "vorzeitiger UID" bekannt) nicht möglich ist.

Es ist daher eine Aufgabe der Erfindung, ein Verfahren anzugeben, mit dem es möglich ist, den Dienst "UID vor Verbindungsannahme" in einer Multi-Protokoll-Umgebung eines Kommunikationsnetzes vorzusehen.

Diese Aufgabe wird durch ein erfindungsgemäßes Verfahren zum Vorsehen eines "User Interactive Dialogue (UID) vor Verbindungsannahme" Dienstes für Telekommunikationsendgeräte in einem Kommunikationsnetz, in welchem ein Steuerelement, beispielsweise ein Media Gateway Controller oder ein Application Server, gelöst, demgemäß zur Steuerung des "UID vor Verbindungsannahme" Dienstes erforderliche Signalisierungsnachrichten und Parameter unter Umsetzung in das Session Initiation Protocol SIP oder aus diesem in ein Standardsignalisierungsprotokoll übertragen werden.

Bezüglich des User Interactive Dialogue bildet das Steuerelement dann einen Service Switching Point SSP.

Ein Vorteil der Erfindung ist darin zu sehen, daß es die Erfindung SIP-Teilnehmern, die direkten Zugang zu einem MGC als Service Control Point (SCP) haben, ermöglicht, den UID Dienst auch ohne vorherige Annahme der Verbindung durch den gerufenen Teilnehmer (d.h. ohne Answer) zu nutzen.

Vorteilhaft ermöglicht die Erfindung ferner die Nutzung des UID Dienstes ohne vorherige Annahme der Verbindung durch den gerufenen Teilnehmer auch für solche PSTN-Teilnehmer, die mittels eines Media Gateway über SIP mit einem MGC als Service Control Point (SCP) verbunden sind.

Dies bringt den besonderen Vorteil mit sich, daß es beispielsweise möglich ist, Dienste anzubieten, ohne daß eine Gebührenerfassung erfolgt, was nach Annahme der Verbindung (d.h. nach Answer) nicht in dieser Form möglich wäre.

Dienste, die üblicherweise spätestens zum Zeitpunkt der Annahme der Verbindung ausgehandelt sein müssen, wie z.B. Userto-User-Services 2 und 3, können mit Hilfe der Erfindung auch nach Durchführen eines UID noch genutzt werden.

Weitere vorteilhafte Ausgestaltungen der Erfindung sind den Unteransprüchen zu entnehmen.

Die folgende Tabelle zeigt eine beispielhafte Umsetzung von ISUP- oder BICC-Nachrichten und Parametern in SIP- und/oder SDP-Nachrichten und umgekehrt:

**Tabelle 1**

| ISUP/BICC | SIP |
|---|---|
| IAM UID capability: through con- nect possible, Q.1601 | INVITE mit SDP attribute: sendrecv (send and receive), RFC 3264: offeranswer, oder kein entsprechendes attribute (default) |
| ACM, CPG UID action indicator: through connect in both directions | Provisional Response 183 mit SDP attribute: sendrecv |

Die folgende Tabelle zeigt eine beispielhafte Umsetzung von INAP-Nachrichten und Parametern in SIP- und/oder SDP-Nachrichten und umgekehrt:

**Tabelle 2**

| INAP | SIP |
|---|---|
| ConnectToResources serviceInteractionIndicator-sTwo: through connect indicator = required | Provisional Response 183 mit SDP attribute: sendrecv (send and receive), RFC 3264: offeranswer, falls zuvor INVITE mit SDP attribute: sendrecv empfangen wurde |

Im folgenden wird die Erfindung anhand eines Ausführungsbeispiels im Zusammenhang mit Zeichnungen näher erläutert. Darin zeigen:
Fig. 1 eine Netzwerkanordnung, bei der zwei PSTN-Netzabschnitte mittels eines paketorientierten Netzes verbunden sind, und
Fig. 2 eine Netzwerkanordnung, bei der ein Steuerelement Service Switching Point ist.

In Fig.1 ist, wie bereits erläutert, eine Netzwerkanordnung dargestellt, die den Fall darstellt, daß zwei PSTN-Netzabschnitte 3, 4 mittels eines paketorientierten Netzes 8 verbunden sind. Dabei werden die Verbindungssteuerungsinformationen über Media Gateway Controller 6, 7 geleitet, die Nutzinformationen hingegen über Media Gateways 10, 11. Sofern die Dienstesteuerung im PSTN verbleibt, muß durch die MGC 6, 7 keine Dienstesteuerung erfolgen.

Die Dienstesteuerung einer IN-Verbindung mit UID ist in ITU-T Q.1601 "Interworking ISUP INAP" erklärt. Dort wird ein UID capability indicator definiert. Dieser zeigt an, ob ein Ursprung bzw. A-Endgerät das Transportieren von Nutzdaten in Vorwärtsrichtung erlaubt, bevor die Verbindung im Ziel bzw. B-Endgerät angenommen wurde (Answer). Ein durch einen Service Control Point SCP gesteuerter IN-Dienst, der von dieser Nutzdaten in Vorwärtsrichtung transportieren will, wird dann beispielsweise in einer INAP Nachricht "ConnectToResources" mit den serviceInteractionIndicatorsTwo mit Hilfe des auf "required" gesetzten "through connect indicator" den Service Switching Point SSP anweisen, mit der ISUP Rückwärtsmeldung ACM (Adress Complete) oder CPG (Call Progress) das frühzeitige Durchschalten mit Hilfe von "through connect in both directions" anzufordern. Nachdem der Teilnehmer im Ursprung den UID Dienst in Anspruch genommen und beendet hat, kann nun der Ruf zu einem neuen Ziel (dem eigentlich B-Teilnehmer) weiter geleitet werden. Für weitere Dienste, beispielsweise Follow On oder Charging, kann der SSP noch in der Verbindung verbleiben.

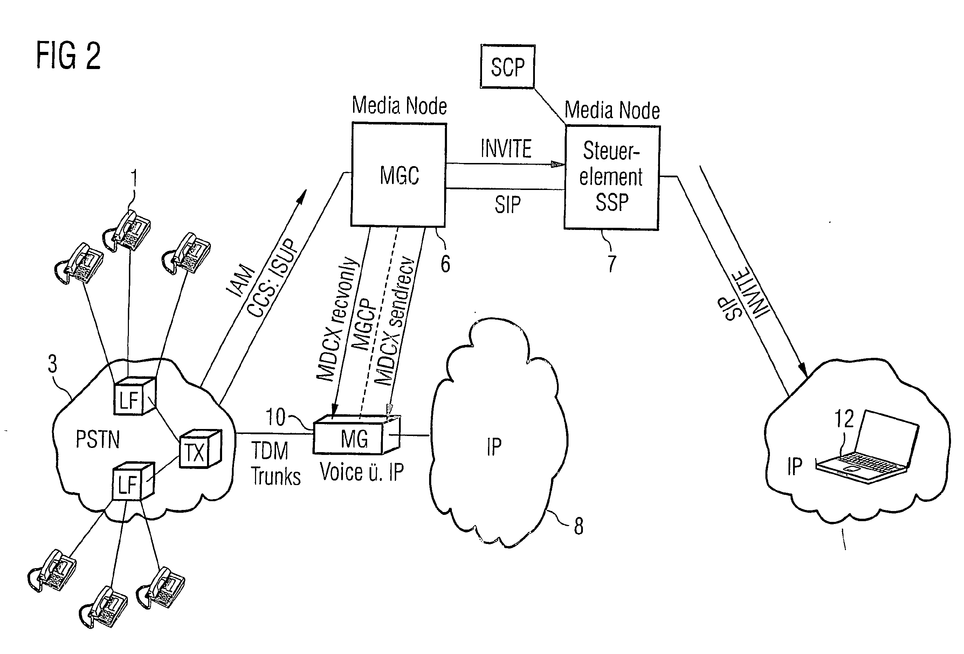

In Fig. 2 ist eine Netzwerkanordnung dargestellt, bei der ein Steuerelement 7 gleichzeitig ein Service Switching Point SSP ist und in Verbindung mit einem Service Control Point SCP steht. Ferner ist das Steuerelement 7 per SIP mit weiteren Netzkomponenten, etwa einem SIP-Endgerät 12 oder dem MGC 6 verbunden.

Anstelle einer Verbindung mit dem SIP-Endgerät 12 kann ausgehend vom Steuerelement 7 auch eine Verbindung mittels ISDN zu einem ISDN-Endgerät oder eine Verbindung mittels BICC, ISUP oder SIP zu einem weiteren Steuerelement bestehen - nicht dargestellt.

In der Netzwerkanordnung aus Fig. 2 werden die beschriebenen Abläufe der Q.1601 zwischen MGC 6 und Steuerelement 7 mittels SIP-Nachrichten signalisiert. Für den Dienst "User Interactive Dialogue vor Verbindungsannahme" kann der zu transportierende Informationsinhalt der für den Dienst vorgesehenen ISUP- und INAP-Nachrichten und Parameter beispielsweise gemäß der Tabellen 1 und 2 auf das Session Initiation Protocol SIP und, sofern erforderlich, auf das Session Description Protocol SDP abgebildet werden.

Nach Beendigung des User Interactive Dialogue zwischen dem Teilnehmer im Ursprung und einem entsprechenden UID-Element wird im Beispiel der Fig. 2 die Verbindung zu SIP-Endgerät weitergeleitet, angedeutet durch die INVITE-Nachricht von Steuerelement 7 in Richtung des SIP-Endgerätes 12. Im Regelfall ist an der Verbindung zwischen Steuerelement 7 und SIP-Endgerät 12 ein SIP Proxy beteiligt - zur besseren Übersicht nicht dargestellt.

Andere, alternative Umsetzungen der Dienstesignalisierung für "User Interactive Dialogue UID vor Verbindungsannahme" auf das Session Initiation Protocol SIP umfassen die Einführung neuer, expliziter Kennzeichen in SIP und/oder SDP, etwa in Form gesonderter Nachrichten, Protokollelemente oder Parameter.

Die Erfindung ist auch dann anwendbar, wenn eine Umsetzung von ISUP Nachrichten und Parametern in SIP/SDP Nachrichten und Parameter nicht unmittelbar erfolgt, sondern zunächst andere Protokolle den Informationsgehalt der ISUP Nachrichten und Parameter aufnehmen und erst anschließend eine Umsetzung in SIP/SDP erfolgt - nicht dargestellt. Ein solches Zwischenprotokoll, beispielsweise auf dem Weg zwischen PSTN und SCP, kann z.B. BICC sein.

Im folgenden sei ein Beispiel für einen UID, für welchen die Erfindung eingesetzt werden kann, kurz erläutert. Ein Teilnehmer wählt eine spezielle Telefonnummer und wird mit einem IN-Amt (IN = Intelligent Network) verbunden. Durch einen dort ablaufenden Prozeß wird der Teilnehmer aufgefordert, eine PIN (PIN = Persönliche Identifikationsnummer) anzugeben, und könnte anschließend aufgefordert werden, eine weitere Rufnummer anzugeben, mit der er verbunden werden möchte.

## Patentansprüche

1. Verfahren zum Steuern eines "User Interactive Dialogue UID vor Verbindungsannahme" Dienstes für Telekommunikationsendgeräte (1, 2, 12) in einem Kommunikationsnetz, das ein Steuerelement (7) aufweist,
**dadurch gekennzeichnet,**
**dass** zur Steuerung des "UID vor Verbindungsannahme" Dienstes erforderliche Signalisierungsnachrichten IAM oder ACM oder CPG und Parameter "UID capability" oder "UID action indicator" unter Umsetzung in das Session Initiation Protocol SIP oder aus diesem in eines der Standardsignalisierungsprotokolle Bearer Independent Call Control BICC, ISDN User Part ISUP oder ISUP+ übertragen werden.

2. Verfahren nach Anspruch 1,
**dadurch gekennzeichnet,**
**daß** das Steuerelement (7) einen Service Switching Point SSP bildet.

3. Verfahren nach einem der Ansprüche 1 oder 2,
**dadurch gekennzeichnet,**
**daß** das Steuerelement (7) ein Media Gateway Controller oder ein Application Server ist.

4. Verfahren nach einem der Ansprüche 1 bis 3,
**dadurch gekennzeichnet,**
**daß** die zur Dienstesteuerung erforderlichen Parameter und Nachrichten gemäß RFC 2327 in einen Session Description Protocol SDP Teil des SIP abgebildet werden.

5. Verfahren nach einem der Ansprüche 1 bis 4,
**dadurch gekennzeichnet,**
**daß** die zur Dienstesteuerung erforderlichen Parameter und Nachrichten gemäß folgender Tabelle zwischen ISUP oder BICC und SIP oder SDP umgesetzt werden:
| ISUP/BICC | SIP |
|---|---|
| IAM UID capability: through connect possible | INVITE mit SDP attribute: sendrecv |
| ACM, CPG UID action indicator: through connect in both directions | Provisional Response 183 mit SDP attribute: sendrecv |

6. Verfahren nach einem der Ansprüche 1 bis 5,
**dadurch gekennzeichnet,**
**daß** die zur Dienstesteuerung erforderlichen Parameter und Nachrichten gemäß folgender Tabelle zwischen dem Intelligent Network Application Part INAP und SIP oder SDP umgesetzt werden:
| INAP | SIP |
|---|---|
| ConnectToResources serviceInteractionIndicatorsTwo: through connect indicator = required | Provisional Response 183 mit SDP attribute: sendrecv |

7. Verfahren nach einem der Ansprüche 2 bis 7, soweit rückbezogen auf Anspruch 2,
**dadurch gekennzeichnet,**
**daß** nach dem Übertragen der Signalisierungsnachrichten und Parameter zum Steuerelement (7) dieses in zugehörigen Media Gateways (11) den Aufbau eines Nutzkanals zwischen verbindungsanforderndem Teilnehmer und dem SSP zum Durchführen des UID steuert.

8. Verfahren nach Anspruch 7,
**dadurch gekennzeichnet,**
**daß** nach dem Durchführen des UID die Verbindung zu einem weiteren adressierten Ziel gesteuert wird.

## Claims

1. Method for controlling a "user interactive dialogue UID prior to call acceptance" service for telecommunication terminals (1, 2, 12) in a communication network which has a control element (7),
**characterized**
**in that** signaling messages IAM or ACM or CPG and parameters "UID capability" or "UID action indicator" which are required for controlling the "UID prior to call acceptance" service are transmitted by converting them to the Session Initiation Protocol SIP or from this protocol to one of the standard signaling protocols Bearer Independent Call Control BICC, ISDN User Part ISUP or ISUP+.

2. Method according to claim 1,
**characterized**
**in that** the control element (7) forms a service switching point SSP.

3. Method according to one of claims 1 and 2,
**characterized**
**in that** the control element (7) is a media gateway controller or an application server.

4. Method according to one of claims 1 to 3,
**characterized**
**in that** the parameters and messages required for service control are mapped into a Session Description Protocol SDP part of the SIP on the basis of RFC 2327.

5. Method according to one of claims 1 to 4,
**characterized**
**in that** the parameters and messages required for service control are converted between ISUP or BICC and SIP or SDP on the basis of the following table:
| ISUP/BICC | SIP |
|---|---|
| IAM UID capability: through connect possible | INVITE with SDP attribute: sendrecv |
| ACM, CPG UID action indicator: through connect in both directions | Provisional Response 183 with SDP attribute: sendrecv |

6. Method according to one of claims 1 to 5,
**characterized**
**in that** the parameters and messages required for service control are converted between the intelligent network application part INAP and SIP or SDP on the basis of the following table:
| INAP | SIP |
|---|---|
| ConnectToResources serviceInteractionIndicatorsTwo: through connect indicator = required | Provisional Response 183 with SDP attribute: sendrecv |

7. Method according to one of claims 2 to 7, insofar as it refers back to claim 2,
**characterized**
**in that** following transmission of the signaling messages and parameters to the control element (7) said control element controls the setup of the user channel between the subscriber requesting the connection and the SSP in associated media gateways (11) in order to perform the UID.

8. Method according to Claim 7,
**characterized**
**in that** following the performance of the UID the connection to a further addressed destination is controlled.

## Revendications

1. Procédé pour commander un service "User Interactive Dialogue UID avant l'établissement d'appel" pour des terminaux de télécommunication (1, 2, 12) dans un réseau de télécommunication, qui présente un élément de commande (7),
**caractérisé en ce que**
des messages de signalisation IAM ou ACM ou CPG et paramètres "UID capability" ou "UID action indicator", qui sont nécessaires pour la commande du service "UID avant l'établissement d'appel", sont transmis avec la conversion dans le "Session Initiation Protocol SIP" ou à partir de celui-ci dans l'un des protocoles de signalisation standard Bearer Independent Call Control BICC, ISDN User Part ISUP ou ISUP+.

2. Procédé selon la revendication 1,
**caractérisé en ce que**
l'élément de commande (7) forme un Service Switching Point SSP.

3. Procédé selon l'une quelconque des revendications 1 ou 2,
**caractérisé en ce que**
l'élément de commande (7) est un Media Gateway Controller ou un Application Server.

4. Procédé selon l'une quelconque des revendications 1 à 3,
**caractérisé en ce que**
les paramètres et messages nécessaires pour la commande de service sont reproduits selon RFC 2327 dans une partie Session Description Protocol SDP du SIP.

5. Procédé selon l'une quelconque des revendications 1 à 4,
**caractérisé en ce que**
les paramètres et messages nécessaires pour la commande de service sont convertis selon le tableau ci-dessous entre ISUP ou BICC et SIP ou SDP :
| ISUP/BICC | SIP |
|---|---|
| IAM UID capability : through connect possible | INVITE avec SDP attribute : sendrecv |
| ACM, CPG UID action indicator : Through connect in both directions | Provisional Response 183 avec SDP attribute : sendrecv |

6. Procédé selon l'une quelconque des revendications 1 à 5,
**caractérisé en ce que**
les paramètres et messages nécessaires pour la commande de service sont convertis selon le tableau ci-dessous entre la Intelligent Network Application Part INAP et SIP ou SDP :
| INAP | SIP |
|---|---|
| ConnectToRessources serviceInteractionIndicatorsTwo : through connect indicator = required | Provisional Response 183 avec SDP attribute: sendrecv |

7. Procédé selon l'une quelconque des revendications 2 à 7, si spécifique à la revendication 2,
**caractérisé en ce que**,
après la transmission des messages de signalisation et paramètres à l'élément de commande (7), celui-ci commande dans des Media Gateways (11) respectifs la mise en place d'un canal utile entre l'abonné demandant la communication et le SSP pour la mise en oeuvre du UID.

8. Procédé selon la revendication 7,
**caractérisé en ce que**
la communication avec une autre cible adressée est commandée après l'exécution du UID.
